# EUROPÄISCHE PATENTSCHRIFT

(11) **EP 0 649 522 B1**
(45) Veröffentlichungstag und Bekanntmachung des Hinweises auf die Patenterteilung: **18.12.1996**
(21) Anmeldenummer: 93914604.9
(22) Anmeldetag: 05.07.1993
(51) Int. Cl.: G01N 1/06

(54) **VERFAHREN UND VORRICHTUNG ZUR HERSTELLUNG VON DÜNNSCHNITTEN MITTELS EINES MIKROTOMS**
PROCESS AND DEVICE FOR PRODUCING THIN SECTIONS BY MEANS OF A MICROTOME
PROCEDE ET DISPOSITIF POUR LA REALISATION DE TRANCHES MINCES AU MOYEN D'UN MICROTOME

(30) Priorität: 10.07.1992 RU 5055244
(43) Veröffentlichungstag der Anmeldung: 26.04.1995
(73) Patentinhaber: MICROM LABORGERÄTE GmbH, 69190 Walldorf (DE)
(72) Erfinder: IZVOZTCHIKOV, Ilia Borisovitch, St. Petersburg, 194233 (RU); MIKHAILOV, Serguei Petrovitch, St. Petersburg, 194175 (RU)
(74) Vertreter: LOUIS, PÖHLAU, LOHRENTZ & SEGETH
(86) Internationale Anmeldenummer: DE9300598
(87) Internationale Veröffentlichungsnummer: WO9401751

(56) Entgegenhaltungen:
- DE-A- 2 200 415
- US-A- 3 191 476
- US-A- 3 552 247

## Beschreibung

Die Erfindung betrifft ein Verfahren zur Herstellung von mittels eines Schneidmessers eines Mikrotoms von einer mittels eines Probenhalters des Mikrotoms gehaltenen Dünnschnittprobe abgeschnittenen Dünnschnitten, die an ein Flüssigkeitsbad übergeben werden, sowie eine Vorrichtung zur Durchführung dieses Verfahrens, die ein Schneidmesser und einen für eine dünn zu schneidende Dünnschnittprobe vorgesehenen Probenhalter aufweist, die relativ zueinander beweglich sind, wobei zur Aufnahme der entsprechenden Dünnschnitte ein Flüssigkeitsbad vorgesehen ist.

Ein derartiges Verfahren und eine Vorrichtung zur Durchführung dieses Verfahrens sind aus der DE-PS 22 00 415 bekannt. Dort schliesst sich das Flüssigkeitsbad unmittelbar an die Messerschneide des Schneidmessers an, wobei die Flüssigkeit sich in Ruhe befindet. Dadurch ist jedoch eine bestimmte, wenn auch bereits relativ geringe Stauchung der einzelnen Dünnschnitte insbesondere im Übergangsbereich zwischen der Messerschneide des Schneidmessers und der ruhenden Bad-Oberfläche nicht auszuschliessen. Um einen im Vergleich zu bekannten Mikrotomen mit bandförmiger Dünnschnitt-Entfernungseinrichtung verbesserten Abtransport der einzelnen Dünnschnitte vom Schneidmesser weg zu erreichen, ist es dort ausserdem erforderlich, das Schneidmesser mit einer Kühleinrichtung und die ruhende Flüssigkeit enthaltenden Flüssigkeitsbehälter mit einer Heizeinrichtung zu versehen, um die Flüssigkeit auf eine bestimmte Temperatur einzustellen. Da die Kühleinrichtung und die Heizeinrichtung relativ eng nebeneinander vorgesehen sind, ist nicht nur eine entsprechende Wärmeisolation erforderlich, sondern es ergibt sich ausserdem ein nicht zu vernachlässigender Energieaufwand für die Kühl- und Heizeinrichtung. Ein weiterer Mangel dieser bekannten Vorrichtung besteht darin, dass im ruhenden Flüssigkeitsbad nicht nur die sogenannten guten Dünnschnitte sondern auch die beispielsweise zwischen solchen guten Dünnschnitten erzeugten, unzureichenden Dünnschnitte aufgenommen werden, die einen nicht zu gebrauchenden Ausschuss darstellen. Das bedeutet jedoch, dass die Arbeit mit einem solchen bekannten Mikrotom noch Wünsche offen lässt.

Der Erfindung liegt die Aufgabe zugrunde, ein Verfahren und eine Vorrichtung der eingangs genannten Art zu schaffen, wobei mit geringem konstruktivem Aufwand und mit vergleichsweise geringem Energieaufwand eine unerwünschte Kompression der einzelnen Dünnschnitte vermieden und gleichzeitig auf einfache Weise an den einzelnen Dünnschnitten eine schnittstreckende Wirkung erzielt wird.

Diese Aufgabe wird verfahrensgemäss dadurch gelöst, dass die Übergabe der Dünnschnitte vom Schneidmesser an das Flüssigkeitsbad mittels eines vom Schneidmesser zu dem vom Schneidmesser beabstandeten Flüssigkeitsbad strömenden Fluides erfolgt. Durch das zwischen dem Schneidmesser bzw. zwischen der Nachbarschaft der Messerschneide des Schneidmessers und dem Flüssigkeitsbad strömende Fluid ergibt sich im unmittelbaren Anschluss an den Schneidvorgang eine auf die einzelne Dünnschnitte einwirkende Transportkraft, mit welcher die besagten Dünnschnitte von der Messerschneide zum Flüssigkeitsbad hin abtransportiert werden, wobei gleichzeitig durch das strömende Fluid eine Streckung der einzelnen Dünnschnitte bewirkt wird. Dadurch wird gleichzeitig in vorteilhafter Weise eine unerwünsche Kompression der einzelnen Dünnschnitte bzw. entsprechender Abschnitte derselben verhindert.

Als besonders vorteilhaft hat es sich hierbei erwiesen, wenn die Übergabe der Dünnschnitte vom Schneidmesser bzw. von der Messerschneide des Schneidmessers des Mikrotoms an das Flüssigkeitsbad mittels eines laminar strömenden Fluides erfolgt. Durch eine solche laminare Strömung des besagten Fluides ergibt sich eine optimale Streckwirkung der einzelnen Dünnschnitte und folglich eine KompressionsVermeidung, so dass unerwünschte Verwölbungen bei den einzelnen Dünnschnitten vermieden werden.

Bei dem erwähnten Fluid zum Transport der Dünnschnitte vom Schneidmesser zum Flüssigkeitsbad kann es sich um ein Gas handeln, das einen Transportpolster bildet, entlang welchem die einzelnen Dünnschnitte von der Messerschneide des Schneidmessers zum Flüssigkeitsbad transportiert werden. Vorteilhaft ist es jedoch, wenn als Fluid die Flüssigkeit des Flüssigkeitsbades verwendet wird. In diesem Fall wird die Bad-Flüssigkeit einfach in einem geschlossenen Kreis zwischen der Nachbarschaft der Messerschneide des Schneidmessers und dem Flüssigkeitsbad und von dort zurück in die Nachbarschaft der Messerschneide des Schneidmessers transportiert. Dadurch ist in vorteilhafter Weise ein möglicher Flüssigkeitsverlust auf ein Minimum beschränkt.

Als besonders vorteilhaft hat es sich erwiesen, wenn beim erfindungsgemässen Verfahren das Fluid mittels einer Umstellungeinrichtung wahlweise zum Flüssigkeitsbad oder zu einem Abfallbehälter gelenkt wird. Auf diese Weise ist es einfach möglich, nur sogenannte gute Dünnschnitte in das Flüssigkeitsbad zu lenken, während unzureichende, d.h. nicht gute Dünnschnitte wie die Anschnitte einer Dünnschnittprobe oder Grobzustellschnitte oder zwischen sogenannten guten Dünnschnitten erzeugte unzureichende Dünnschnitte, einfach in den Abfallbehälter gelenkt werden können. Die Feststellung, ob ein Dünnschnitt gut oder unzureichend ist, ist dabei in vorteilhafter Weise einfach entlang der Strecke zwischen der Messerschneide des Schneidmessers und dem Flüssigkeitsbad, d.h. entlang der Strecke möglich, entlang welcher die entsprechenden Dünnschnitte mit Hilfe des strömenden Fluides transportiert werden. Durch geeignete Wahl der Strömungsgeschwindigkeit des strömenden Fluides und durch geeignete Wahl der Länge der Fluid-Strömungsstrecke, d.h. durch geeignete Wahl des Abstandes zwischen dem Schneidmesser und dem Flüssigkeitsbad, ist es möglich, die Verweildauer der einzelnen Dünnschnitte zu deren optischer Untersuchung ausreichend gross zu gestalten, um mit Hilfe der erwähnten Umlenkeinrichtung die einzelnen Dünnschnitte entweder zum Flüssigkeitsbad oder zum Abfallbehälter zu lenken. Im Gegensatz zu dem aus der eingangs erwähnten DE-PS 22 00 415 bekannten Mikrotom, bei dem es zur Unterscheidung zwischen guten Dünnschnitten und groben Anschnitten erforderlich ist, den Probenhalter in Bezug auf das Schneidmesser seitlich zu verstellen, um ihn entweder dem Flüssigkeitsbad oder einem Bereich seitlich neben dem Flüssigkeitsbad zuzuordnen, ist es erfindungsgemäss nicht erforderlich, eine entsprechende seitliche Verschiebung zwischen Probenhalter und Schneidmesser des Mikrotoms vorzunehmen. Dadurch ist in vorteilhafter Weise jedoch auch die Präzision der Dünnschnittarbeit erfindungsgemäss verbessert.

Um erfindungsgemäss die verschiedensten Materialien wie histologische Dünnschnittproben, die in Wachs eingebettet sind, Dünnschnittproben aus Kunstharzen oder Kunststoffmischungen in den verschiedensten Wanddicken von z.B. 1 µm oder auch erheblich dickere Dünnschnitte kompressionslos und ungewölbt produzieren zu können, ist es zweckmässig, wenn erfindungsgemäss die Fluidmenge und/oder die Fluidgeschwindigkeit stromabwärts nach dem Schneidmesser geeignet eingestellt wird. Als Faustformel mag hierbei gelten: Je grösser die Wanddicke der Dünnschnitte ist, umso grösser sollte insbesondere die Fluidmenge sein, die pro Zeiteinheit von der Nachbarschaft der Messerschneide des Schneidmessers zum Flüssigkeitsbad oder zum Abfallbehälter fliesst. Die Fluidgeschwindigkeit ist insbesondere von der Schnittgeschwindigkeit abhängig, mit welcher ein Dünnschnitt von der Dünnschnittprobe abgeschnitten wird. Hier mag die Faustformel gelten: Je grösser die Schnittgeschwindigkeit ist, umso grösser sollte die Fluidgeschwindigkeit sein, um einen entsprechenden Streckeffekt zu erzielen.

Bei der Durchführung einzelner zeitlich voneinander getrennter Dünnschnitte kann immer wieder festgestellt werden, dass die einzelnen Dünnschnitte mit ihrem rückwärtigen Rand an der Messerschneide des Schneidmessers hängen bleiben. Der gleiche Effekt kann festgestellt werden, wenn Dünnschnitte unmittelbar aufeinanderfolgend produziert werden, die dann ein sogenanntes Dünnschnittband bilden. Im zuletzt genannten Fall bleibt oftmals der letzte Dünnschnitt mit seinem rückwärtigen Rand an der Messerschneide des Schneidmessers hängen. Dadurch ergibt sich jedoch eine Beeinträchtigung der Schneidarbeit. Um diese Beeinträchtigung zu beseitigen, hat es sich als vorteilhaft erwiesen, wenn die Ablösung des rückwärtigen Randes des bzw. des jeweils letzten Dünnschnittes eines Dünnschnittbandes bzw. einer Dünnschnitt-Serie mittels einer neben dem Schneidmesser vorgesehenen und in Bezug auf die Messerschneide des Schneidmessers verstellbaren Ablöseeinrichtung erfolgt. Diese Ablöseeinrichtung kann manuell oder mit Hilfe einer geeigneten Antriebseinrichtung betätigt werden. Gleiches gilt für die weiter oben erwähnte Umlenkeinrichtung für das die Dünnschnitte vom Schneidmesser zum Flüssigkeitsbad bzw. zum Abfallbehälter transportierende Fluid; sie kann ebenfalls manuell oder mit Hilfe einer geeigneten Antriebseinrichtung das Fluid wahlweise zum Flüssigkeitsbad oder zum Abfallbehälter lenken.

Die der Erfindung zugrundeliegende Aufgabe wird vorrichtungsgemäss dadurch gelöst, dass das Flüssigkeitsbad vom Schneidmesser beabstandet vorgesehen ist, und dass zwischen dem Schneidmesser und dem Flüssigkeitsbad ein Strömungskanal für ein Fluid vorgesehen ist, mittels welchem die Dünnschnitte von der Messerschneide des Schneidmessers zum Flüssigkeitsbad transportierbar sind bzw. transportiert werden, wobei der an die Messerschneide angrenzende Abschnitt des Schneidmessers eine Kavität des Strömungskanales begrenzt, aus der zumindest ein Anteil des Fluides austritt und in den Strömungskanal fliesst. Mit Hilfe des Strömungskanales zwischen dem Schneidmesser und dem Flüssigkeitsbad ergibt sich die Möglichkeit, das die Dünnschnitte transportierende Fluid definiert vom Schneidmesser bzw. von der Messerschneide des Schneidmessers bis zum Flüssigkeitsbad zu leiten und hierdurch die Dünnschnitte kompressionsvermeidend und schnittstreckend zu transportieren. Gleichzeitig ist es möglich, entlang des besagten Strömungskanales die einzelnen transportierten Dünnschnitte zu untersuchen, um sogenannte gute Dünnschnitte von unzureichenden Dünnschnitten oder grob zugestellten Anschnitten oder dergleichen separarieren zu können. Dadurch ergibt sich in vorteilhafter Weise eine Entlastung des Flüssigkeitsbades von unzureichenden Dünnschnitten.

Eine gute schnittstreckende und kompressionsverhindernde Wirkung wird erreicht, wenn der Strömungskanal für eine mindestens annähernd laminare Strömung des Fluides vorgesehen ist. Das ist durch geeignete Ausbildung des Strömungskanales realisierbar. Hierbei ist der Strömungskanal zweckmässigerweise stromabwärts nach der an das Schneidmesser bzw. seine Messerschneide angrenzenden Kavität mit einem Boden und mit zwei vom Boden wegstehenden, einander gegenüberliegenden Seitenwänden ausgebildet, wobei der Boden und/oder die Seitenwände zur wahlweisen Einstellung der Fluidmenge und/oder der Fluidgeschwindigkeit im Strömungskanal mit zusätzlichen Fluideinlässen versehen sein können. Auf derartige Fluideinlässe kann im Bedarfsfalle auch verzichtet werden, d.h. es kann ausreichend sein, den Strömungskanal in der Nachbarschaft der Messerschneide des Schneidmessers nur mit der oben erwähnten Kavität auszubilden, aus welcher das Fluid in den Strömungskanal austritt. Bei dem Fluid kann es sich - wie bereits ausführt worden ist - um ein Gas handeln; vorzugsweise kommt als Fluid jedoch eine Flüssigkeit zur Anwendung, weil mit einer geeigneten Flüssigkeit ein guter Streckeffekt der Dünnschnitte erreichbar ist. Bei der genannten Flüssigkeit kann es sich um Wasser handeln, das mit geeigneten Zusätzen gemischt sein kann.

Als vorteilhaft hat es sich bei der erfindungsgemässen Vorrichtung erwiesen, wenn im Strömungskanal zur wahlweisen Lenkung des Fluids zum Flüssigkeitsbad oder zu einem Abfallbehälter eine Umlenkeinrichtung vorgesehen ist. Mit Hilfe der Umlenkeinrichtung ist es nämlich möglich, sogenannte gute Dünnschnitte mit Hilfe des Fluids im Strömungskanal zum Flüssigkeitsbad zu lenken und andere Dünnschnitte wie unzureichende Dünnschnitte, grob zugestellte Anschnitte usw., zum Abfallbehälter umzulenken. Hierdurch ergibt sich der Vorteil, dass im Flüssigkeitsbad tatsächlich nur sogenannte gute Dünnschnitte auf der Flüssigkeits-Oberfläche schwimmen und von dort in an sich bekannter Weise abgenommen werden können.

Wenn als Fluid für den Strömungskanal die Flüssigkeit des genannten Flüssigkeitsbades verwendet wird, ist es zweckmässig, wenn das Flüssigkeitsbad mit einem Überlauf versehen ist, der in den Abfallbehälter einmündet und der Abfallbehälter mittels einer Rückleitung mit der an das Schneidmesser angrenzenden Kavität verbunden ist, wobei in der Rückleitung eine Fördereinrichtung für das Fluid vorgesehen ist. Bei dieser Fördereinrichtung handelt es sich zweckmässigerweise um eine Förderpumpe. Ist der Strömungskanal mit den weiter oben erwähnten zusätzlichen Fluideinlässen ausgebildet, so ist es zweckmässig, wenn die zuletzt erwähnte Rückleitung nicht nur mit der in der Nachbarschaft des Schneidmessers vorgesehenen Kavität sondern ausserdem auch mit diesen Fluideinlässen verbunden ist. Mit Hilfe dieser Fluideinlässe ist es dann nämlich möglich, je nach der Stellung der Umlenkeinrichtung zum Flüssigkeitsbad oder zum Abfallbehälter hin, die Strömung des Fluides im Strömungskanal gezielt derartig einzustellen, dass durch die besagte Fluidströmung die Lenkwirkung der Umlenkeinrichtung verstärkt bzw. verbessert wird.

Dadurch, dass das Flüssigkeitsbad mit einem Überlauf versehen ist, der in den Abfallbehälter einmündet, ergibt sich ausserdem der Vorteil, dass der Verbrauch an Flüssigkeit relativ gering ist.

Bei der erfindungsgemässen Vorrichtung kann die Umlenkeinrichtung eine um eine zum Boden des Strömungskanals parallele Schwenkachse verschwenkbare, einen Abschnitt des Bodens des Strömungskanals bildende Klappe aufweisen. Eine andere Möglichkeit besteht darin, dass die Umlenkeinrichtung einen um eine zum Boden des Strömungskanals senkrechte Achse schwenkbaren Teller mit einer aus dem Tellerboden herausragenden Ablenkfläche aufweist. Eine weitere Möglichkeit besteht darin, dass bei der erfindungsgemässen Vorrichtung die Umlenkeinrichtung einen um eine zum Boden des Strömungskanals senkrechte Drehachse schwenkbaren Ablenkfinger mit zwei aus dem Strömungskanal herausstehenden, voneinander abgewandten Lenkflächen aufweist. Unabhängig von der speziellen Gestaltung der Umlenkeinrichtung ist es mit ihr einfach möglich, die Strömung des Fluides vom Schneidmesser weg gezielt entweder zum Flüssigkeitsbad oder zum Abfallbehälter zu lenken, um sogenannte gute Dünnschnitte zum Flüssigkeitsbad bzw. unzureichende Dünnschnitte, grob zugestellte Anschnitte oder dergleichen zum Abfallbehälter zu lenken.

Der Badbehälter kann in an sich bekannter Weise mit einer Heizeinrichtung versehen sein, um eine Erwärmung der im Behälter befindlichen Flüssigkeit zu bewirken, was insbesondere bei in Wachs eingebetteten Dünnschnittproben sinnvoll sein kann.

Zum Ablösen des rückwärtigen Randes des bzw. des jeweils letzten Dünnschnittes einer Dünnschnitt-Serie kann neben dem Schneidmesser im Bereich der Kavität des Strömungskanales eine Ablöseeinrichtung vorgesehen sein, die in Bezug auf die Messerschneide verstellbar ist. Diese Ablöseeinrichtung kann blatt- oder schneidenförmig oder als zwischen zwei seitlichen Schenkelteilen eingespanntes Drahtelement oder dergleichen ausgebildet und manuell oder mittels einer Antriebseinrichtung betätigbar sein. Entsprechend kann je nach dem gewünschten Bedienungskomfort der erfindungsgemässen Vorrichtung die im Strömungskanal vorgesehene Umlenkeinrichtung für das die Dünnschnitte transportierende Fluid manuell oder durch eine geeignete Antriebseinrichtung betätigbar sein.

Weitere Einzelheiten, Merkmale und Vorteile ergeben sich aus der nachfolgenden Beschreibung von in der Zeichnung dargestellten Ausführungsbeispielen der erfindungsgemässen Vorrichtung zur Durchführung des erfindungsgemässen Verfahrens.

Es zeigen -:
- Figur 1: teilweise aufgeschnitten in einer Seitenansicht eine erste Ausbildung der Vorrichtung,
- Figur 2: eine vergrösserte Darstellung des Details II in Figur 1 in einer Schnittdarstellung,
- Figur 3: abschnittweise eine Ansicht der Vorrichtung gemäss Figur 1 in Blickrichtung des Pfeiles III von oben,
- Figur 4: eine der Figur 1 ähnliche teilweise aufgeschnittene Seitenansicht einer zweiten Ausführungsform der Vorrichtung,
- Figur 5: eine Ansicht insbesondere der Umlenkeinrichtung gemäss Figur 4 in Blickrichtung des Pfeiles V in Figur 4, wobei der Strömungskanal und der Flüssigkeitsbehälter sowie der Abfallbehälter nur abschnittweise dargestellt sind,
- Figur 6: eine den Figuren 1 bzw. 4 ähnliche teilweise aufgeschnittene Seitenansicht der wesentlichen Teile einer dritten Ausbildung der Vorrichtung,
- Figur 7: eine Draufsicht auf wesentliche Teile der Vorrichtung gemäss Figur 6 in Blickrichtung des Pfeiles VII insbesondere zur Verdeutlichung der dritten Ausbildung der Umlenkeinrichtung in Verbindung mit dem abschnittweise angedeuteten Strömungskanal und dem abschnittweise gezeichneten Flüssigkeitsbad und Abfallbehälter,
und
- Figur 8: einen Schnitt durch einen Messerhalter für ein Schneidmesser insbesondere zur Verdeutlichung der in der Nachbarschaft des Schneidmessers beweglich vorgesehenen Ablöseeinrichtung für einzelne Dünnschnitte bzw. ein Dünnschnittband.

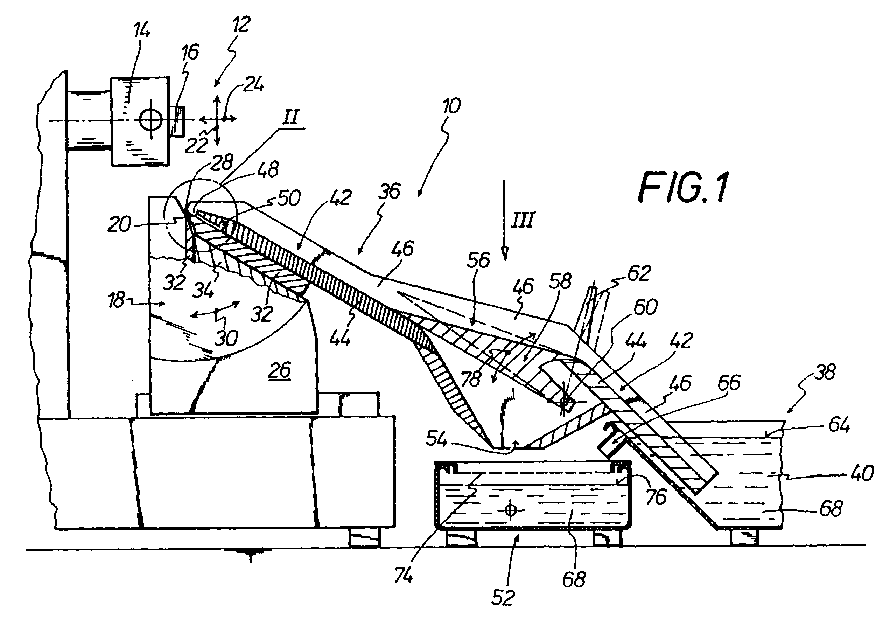

Figur 1 zeigt in einer Seitenansicht abschnittweise eine Vorrichtung 10 mit einem abschnittweise gezeichneten Mikrotom 12, das einen Probenhalter 14 zum Befestigen einer dünn zu schneidenden Dünnschnittprobe 16 und einen Messerhalter 18 zum Fixieren eines Schneidmessers 20 aufweist. Der Probenhalter 14 und das Schneidermesser 20 sind zum Anschneiden von Dünnschnitten von der Dünnschnittprobe 16 relativ zueinander in einer ersten Raumrichtung beweglich, was durch den Doppelpfeil 22 verdeutlicht ist. Der Doppelpfeil 22 stellt also die Schnittbewegung dar. Ausserdem sind der Probenhalter 14 und das Schneidmesser 20 relativ zueinander in einer zur ersten Raumrichtung 22 senkrechten zweiten Raumrichtung verstellbar, was durch den Doppelpfeil 24 angedeutet ist. Der Doppelpfeil 24 verdeutlicht also die Zustellbewegung, durch welche die Schnittdicke, d.h. die Dicke der einzelnen von der Dünnschnittprobe 16 abgeschnittenen Dünnschnitte eingestellt wird. Ausserdem kann der Messerhalter 18 in Bezug auf ein Grundteil 26 des Mikrotoms 12 um die Messerschneide 28 herum verschwenkt werden, was durch den bogenförmigen Doppelpfeil 30 angedeutet ist. Hierdurch kann der Schnittwinkel des Schneidmessers 20 in Bezug auf die dünn zu schneidende Dünnschnittprobe 16 eingestellt werden.

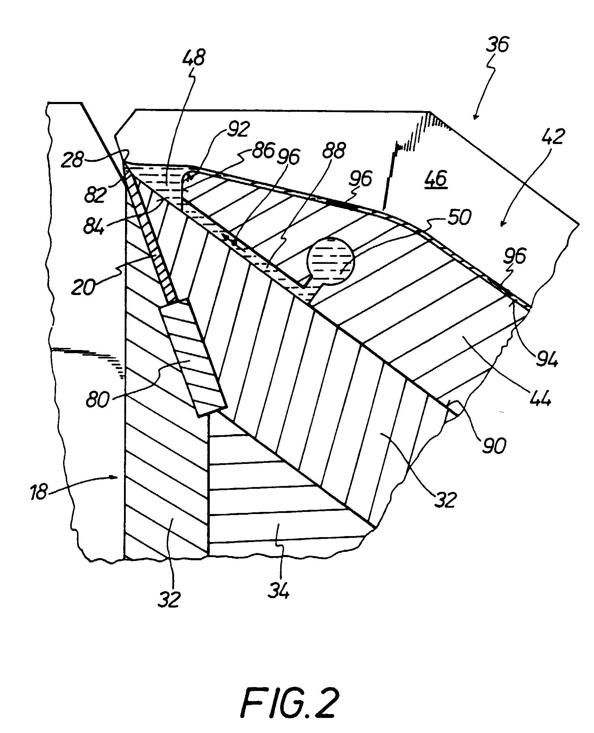

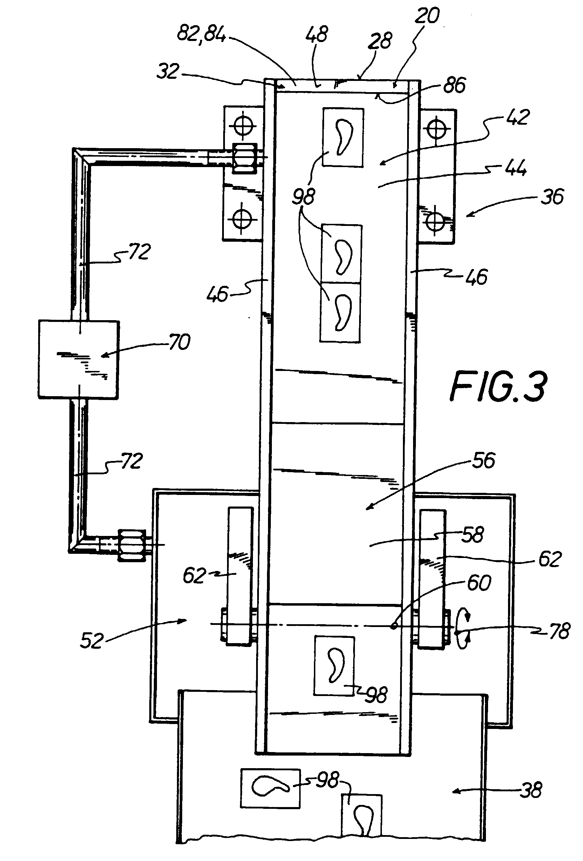

Der Messerhalter 18, der nicht Gegenstand der vorliegenden Erfindung ist, weist beispielsweise zwei Klemmbackenelemente 32 zum Festklemmen des Schneidmessers 20 auf, die an einem keilförmigen Basisteil 34 verstellbar vorgesehen sind. Auf dem Basisteil 34 bzw. am Messerhalter 18 ist eine Einrichtung 36 vorgesehen, die zwischen dem Schneidmesser 20 bzw. zwischen dem an die Messerschneide 18 unmittelbar angrenzenden Abschnitt des Schneidmessers 20 und einem Badbehälter 38 für ein Flüssigkeitsbad 40 eine fluidische Verbindung herstellt. Zu diesem Zweck ist die Einrichtung 36 mit einem Strömungskanal 42 versehen, der einen Boden 44 und zwei voneinander beabstandete und vom Boden 44 in die gleiche Richtung wegstehende Seitenwände 46 aufweist. In der unmittelbaren Nachbarschaft der Messerschneide 28 des Schneidmessers 20 ist die Einrichtung 36 mit einer Kavität 48 ausgebildet, die weiter unten in Verbindung mit Figur 2 noch detailierter beschrieben wird. Die Kavität 48 ist mit einem Sammelraum 50 fluidisch verbunden, der selbst mit einem Abfallbehälter 52 fluidisch verbunden ist. Der Abfallbehälter 52 ist unter einem in der Einrichtung 36 ausgebildeten Auslass 54 angeordnet, über welchem eine Umlenkeinrichtung 56 vorgesehen ist. Bei dem in Figur 1 gezeichneten Ausführungsbeispiel weist die Umlenkeinrichtung 56 eine Klappe 58 auf, die um eine zum Boden 44 des Strömungskanals 42 parallele Schwenkachse 60 zwischen einer ersten in dieser Zeichnungs-Figur schraffiert und mit durchgezogenen Linien gezeichneten Stellung und einer mit dünnen strichlierten Linien gezeichneten Stellung verstellbar ist. Zu diesem Zweck kann die Klappe 58 mit mindestens einem seitlich neben der Einrichtung 36 vorgesehenen Schwenkhebel 62 verbunden sein.

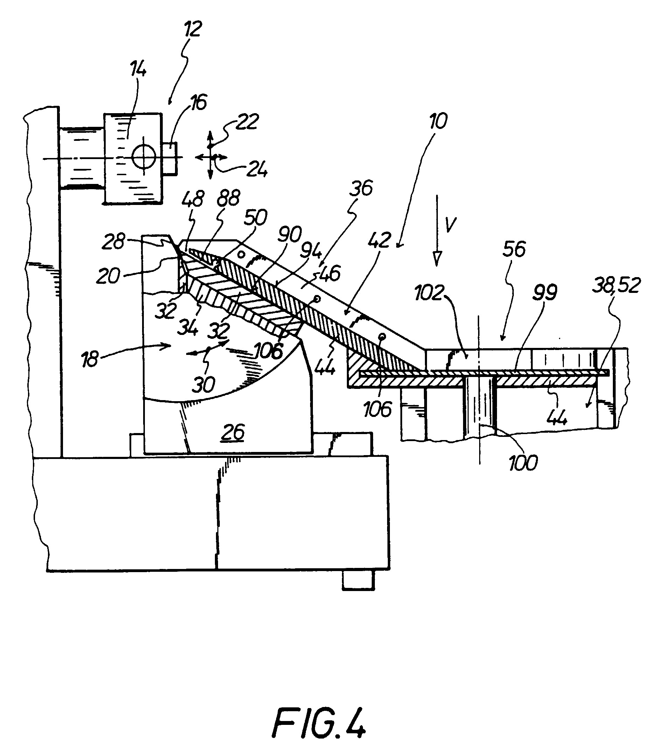

In der mit durchgezogenen Linien und schraffiert gezeichneten Stellung der Klappe 58 der Umlenkeinrichtung 56 ist zwischen der in der Nachbarschaft der Messerschneide 28 des Schneidmessers 20 vorgesehenen Kavität 48 und dem Badbehälter 38 eine fluidische Verbindung gegeben, so dass mit Hilfe eines Fluides, das den Strömungskanal 42 zum Badbehälter 38 hin durchströmt, von der Dünnschnittprobe 16 abgeschnittene Dünnschnitte in das Flüssigkeitsbad 40 des Badbehälters 38 eingeleitet werden. Bei diesen Dünnschnitten handelt es sich um sogenannte gute Dünnschnitte, die dann aus dem Flüssigkeitsbad 40, auf dessen Flüssigkeits-Oberfläche 64 sie schwimmen, in bekannter Art und Weise entnommen werden. Der Badbehälter 38 ist mit einem Überlauf 66 ausgebildet, durch den überschüssige Flüssigkeit vom Badbehälter 38 zum Abfallbehälter 52 übergeleitet wird. Vom Abfallbehälter 52 wird die Flüssigkeit 68 dann zum Sammelraum 50 zurückbefördert, was mittels einer Fördereinrichtung 70 geschieht, wie sie in Figur 3 schematisch angedeutet ist. Bei dieser Fördereinrichtung 70 handelt es sich zweckmässigerweise um eine Förderpumpe. Aus Figur 3 ist ausserdem eine Rohrleitung 72 ersichtlich, in welcher die besagte Fördereinrichtung 70 angeordnet ist, und welche den Abfallbehälter 52 mit dem Sammelraum 50 (siehe Figur 1) fluidisch verbindet.

Um insbesondere ein Verstopfen der Rohrleitung 72 bzw. der Fördereinrichtung 70 in der Rohrleitung 72 mit Dünnschnitten zu verhindern, ist der Abfallbehälter 52 z.B. mit einer Siebeinrichtung 74 versehen, die über dem Flüssigkeitsspiegel 76 des Abfallbehälters 52 angeordnet ist. Auf der Siebeinrichtung 74 kommen dann Dünnschnittproben zu liegen, wenn die Umlenkeinrichtung 56, d.h. die Klappe 58, von der mit durchgezogenen Linien und schraffiert gezeichneten Position in die mit dünnen strichlierten Linien angedeutete Stellung verschwenkt wird. Dann ist nämlich die fluidische Verbindung zwischen der in der Nachbarschaft der Messerschneide 28 des Schneidmessers 20 vorgesehenen Kavität 48 und dem Badbehälter 38 unterbrochen und eine fluidische Verbindung zwischen der besagten Kavität 48 und dem Abfallbehälter 52 durch den Auslass 54 hindurch hergestellt.

Die Verschwenkung der Klappe 58 um die Schwenkachse 60 herum ist in Figur 1 durch den Doppelpfeil 78 angedeutet.

Figur 2 verdeutlicht in einem stark vergrösserten Massstab abschnittweise den Messerhalter 18 mit dem keilförmigen Basisteil 34, an welchem die beiden Klemmbackenelemente 32 vorgesehen sind, die zum Festklemmen eines Schneidmessers 20 dienen. Das Schneidmesser 20 liegt z.B. an einem Widerlagerorgan 80 an und steht mit seiner Messerschneide 28 über die Klemmbackenelemente 32 vor.

Am vorderseitigen, d.h. dem Bad- bzw. Abfallbehälter zugewandten Klemmbackenelement 32 ist die einen Strömungskanal 42 bildende Einrichtung 36 angeordnet. Der Strömungskanal 42 ist durch den Boden 44 und durch die zwei voneinander beabstandeten und vom Boden 44 in die gleiche Richtung wegstehenden Seitenwände 46 festgelegt.

Die Einrichtung 36 ist in unmittelbarer Nachbarschaft des Schneidmessers 20 bzw. der Messerschneide 28 des Schneidmessers 20 mit der Kavität 48 ausgebildet. Die Kavität 48 ist einerseits durch die Messerschneide 28 des Schneidmessers 20 und den daran unmittelbar anschliessenden Schneidenrücken 82 des Schneidmessers 20 und den daran anschliessenden Vorderabschnitt 84 des vorderen Klemmbackenelementes 32 und andererseits durch einen geeignet geformten Vorderrand 86 des Bodens 44 der Einrichtung 36 begrenzt und festgelegt. In den Vorderrand 86 münden voneinander beanstandete Kanäle 88 ein, die an der Unterseite 90 des Bodens 44 der Einrichtung 36 ausgebildet sind. Die Kanäle 88 sind mit dem im Boden 44 in Querrichtung verlaufenden Kanal 50 fluidisch verbunden.

Der Vorderrand 86 des Bodens 44 der Einrichtung 36 ist oberseitig durch eine Randkante 92 begrenzt. Die Einrichtung 36 ist am vorderen Klemmbackenelement 32 derartig befestigt, dass die zuletzt erwähnte Randkante 92 sich unterhalb der Messerschneide 28 des Schneidmessers 20 befindet. Dadurch ergibt sich eine Strömung eines Fluides vom Sammelraum 50 durch die Kanäle 88 zur Kavität 48 und von dort entlang der Oberseite 94 des nach unten geneigten Bodens 44 der Einrichtung 36, d.h. entlang des Strömungskanales 42. Diese Strömung des Fluides ist in Figur 2 durch die Pfeile 96 angedeutet. Vorzugsweise handelt es sich bei dieser Strömung um eine laminare Strömung, die dazu dient, Dünnschnitte vom Schneidmesser 20 weg entweder zum Badbehälter 38 (siehe beispielsweise Figur 1) oder zum Abfallbehälter 52 zu transportieren, wobei durch die besagte Strömung eine Stauchung der einzelnen Dünnschnitte verhindert und gleichzeitig eine Streckung derselben erzielt wird.

Figur 3 zeigt in einer Ansicht von oben die Messerschneide 28 des Schneidmessers 20, den Vorderrand 86 des Bodens 44 der Einrichtung 36, der durch zwei Seitenwände 46 begrenzt ist. Durch den Vorderrand 86 des Bodens 44 der Einrichtung 36 und durch den Vorderabschnitt 84 des vorderen Klemmbackenelementes 32 sowie den Schneidenrücken 82 des Schneidmessers 20 wird die Kavität 48 festgelegt. Die Kavität 48 bildet für den Strömungskanal 42 gleichsam eine Fluidquelle. Diese Fluidquelle wird durch die Rohrleitung 72 mit dem Fluid gespeist.

Im Strömungskanal 42 befindet sich die Umlenkeinrichtung 56, die bei dieser Ausführungsform - wie aus Figur 1 ersichtlich ist - eine Klappe 58 aufweist, die um die Schwenkachse 60 verschwenkbar ist. Zu diesem Zweck ist die Klappe 58 mit zwei seitlichen Schwenkhebeln 62 verbunden, so dass sowohl eine Bedienung mit der rechten Hand als auch eine Bedienung mit der linken Hand möglich ist. Die Verschwenkung der Klappe 58, d.h. die Betätigung der Umlenkeinrichtung 56, ist auch in Figur 3 durch den Doppelpfeil 78 angedeutet. In Figur 3 ist die Umlenkeinrichtung 56 in der Stellung gezeichnet, in welcher die Dünnschnitte 98 durch den Strömungskanal 42 in den Badbehälter 38 geleitet werden. Der Badbehälter 38 ist mittels eines Überlaufes 66 (siehe auch Figur 1) fluidisch mit dem Abfallbehälter 52 verbunden, aus dem die Rohrleitung 72 ausmündet. Das den Strömungskanal 42 vorzugsweise laminar entlangströmende Fluid befindet sich also in jedem Fall, d.h. unabhängig von der einen oder anderen möglichen Stellung der Umlenkeinrichtung 56, in einem geschlossenen Kreislauf. Der Verlust an Fluid, bei dem es sich in diesem Fall also um die Flüssigkeit im Abfallbehälter 52 bzw. im Badbehälter 38 handelt, ist vernachlässigbar gering.

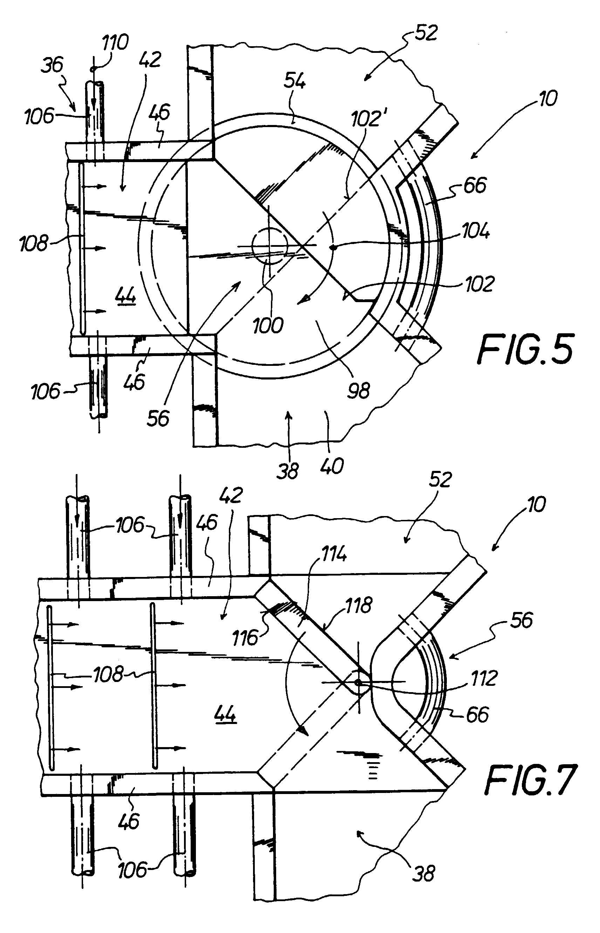

Die Figuren 4 und 5 zeigen eine zweite Ausbildung der Vorrichtung 10, wobei in diesen Zeichnungs-Figuren gleiche Einzelheiten mit denselben Bezugszeichen bezeichnet sind wie in den Figuren 1, 2 und 3, so dass darauf verzichtet werden kann, alle diese Einzelheiten noch einmal detailiert zu beschreiben. Die Figuren 4 und 5 dienen insbesondere zur Verdeutlichung der zweiten Ausführungsform der Umlenkeinrichtung 56 im Strömungskanal 42 der Einrichtung 36. Bei dieser Ausbildung weist die Umlenkeinrichtung 56 einen Teller 99 auf, der mit einer Achse 100 verbunden ist. Die Achse 100 ist zum Strömungskanal 42 senkrecht orientiert. Aus dem Teller 99 steht eine Ablenkfläche 102 vor.

Aus Figur 5 ist ersichtlich, dass der Teller 99 zwischen einer mit durchgezogenen Linien gezeichneten Stellung und einer mit einer dünnen strichlierten Linie angedeuteten Stellung verschwenkbar ist, was durch den Pfeil 104 angedeutet ist. In der mit durchgezogenen Linien gezeichneten Stellung der Ablenkfläche 102 ist der Strömungskanal 42 mit dem abschnittweise gezeichneten Badbehälter 38 mit dem Flüssigkeitsbad 40 fluidisch verbunden. In der mit dünnen strichlierten Linien gezeichneten Stellung der Ablenkfläche 102' ist der Strömungskanal 42 mit dem abschnittweise gezeichneten Abfallbehälter 52 fluidisch verbunden. Auch bei dieser Ausbildung der Vorrichtung 10 ist der Badbehälter 38 durch einen Überlauf 66 mit dem Abfallbehälter 52 verbunden. Der Abfallbehälter 52 selbst ist wiederum mittels einer Rohrleitung 72 (siehe Figur 3) mit dem Sammelraum 50 (siehe die Figuren 1, 2 und 4) fluidisch verbunden.

In Figur 5 sind ausserdem zwei sich seitlich gegenüberliegende Fluideinlässe 106 abschnittweise gezeichnet, die in die Seitenwände 46 des Strömungskanals 40 einmünden. Ausserdem ist ein Fluideinlass 108 dargestellt, der im Boden 44 des Strömungskanals 42 ausgebildet ist. Die Fluideinlässe 106 und 108 sind ebenfalls mittels (nicht gezeichneter) Rohrleitungen, in welchen Ventileinrichtungen vorgesehen sein können, mit dem Abfallbehälter 52 fluidisch verbunden. Die Einspeisung eines entsprechenden Anteils des Fluides durch die schlitzförmigen Fluideinlässe 108 im Boden 44 des Strömungskanals 42 kann hierbei permanent erfolgen, während die Einleitung eines entsprechenden Anteils des Fluides durch die Fluideinlässe 106 zweckmässigerweise von der jeweiligen Stellung des Tellers 99 der Umlenkeinrichtung 56 abhängig gewählt wird. Befindet sich die Ablenkfläche 102 in der mit durchgezogenen Linien gezeichneten Stellung, so erfolgt zweckmässigerweise die Einleitung eines entsprechenden Anteils des Fluides durch die in Figur 5 oben gezeichneten Fluideinlässe 106, was durch den Pfeil 110 angedeutet ist. Hierdurch ergibt sich nämlich eine Verstärkung der Strömung entlang des Randes der oberen, d.h. in Strömungsrichtung linken Seitenwand 46 und von dort entlang der Ablenkfläche 102 der Umlenkeinrichtung 56, wodurch eine gute Lenkung der Dünnschnittproben 16 durch den Strömungskanal 42 zum Badbehälter 38 erfolgt. Wird die Umlenkeinrichtung 56 in die mit dünnen strichlierten Linien gezeichnete Stellung der Ablenkfläche 102' umgestellt, so wird zweckmässigerweise gleichzeitig die Strömung des entsprechenden Anteils des Fluides durch die in Figur 5 oben gezeichneten Fluideinlässe 106 unterbrochen und der entsprechende Anteil des Fluides durch die unteren, d.h. in Strömungsrichtung des Fluides auf der rechten Seite befindlichen Fluideinlässe 106 in den Strömungskanal 42 eingeleitet um nun die Strömung an der Ablenkfläche 102' entsprechend zu verstärken. Die Strömung des Fluides durch die schlitzförmigen Fluideinlässe 108 im Boden 44 des Strömungskanals 42 kann hierbei unverändert bleiben.

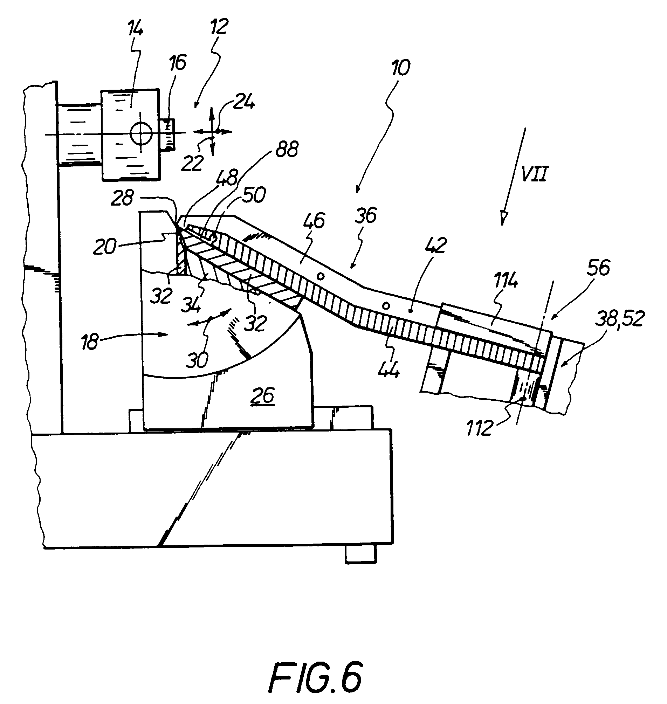

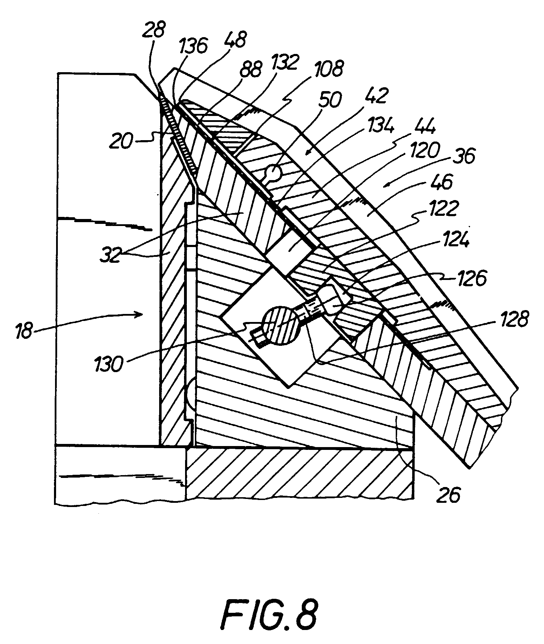

Die Figuren 6 und 7 verdeutlichen die Vorrichtung 10 mit einer dritten Ausbildung der Umlenkeinrichtung 56 im Strömungskanal 42 der Einrichtung 36 zwischen dem Schneidmesser 20 des Mikrotoms 12 und dem Badbehälter 38 bzw. dem Abfallbehälter 52. Bei dieser Ausbildung weist die Umlenkeinrichtung 56 einen um eine Drehachse 112 herum verschwenkbaren Ablenkfinger 114 auf, der zwischen der in Figur 7 mit durchgezogenen Linien gezeichneten einen Stellung und der mit dünnen strichlierten Linien gezeichneten zweiten Stellung verstellbar ist. In der ersten Stellung des Ablenkfingers 114 ergibt sich durch die entsprechende Lenkfläche 116 eine Umlenkung des Fluides in den Badbehälter 38 hinein, während in der mit den dünnen strichlierten Linien gezeichneten zweiten Stellung des Ablenkfingers 114 die zweite Lenkfläche 118 zur Umlenkung des Fluides in den Abfallbehälter 52 hinein wirksam ist. Auch bei dieser Ausbildung der Vorrichtung 10 erfolgt zweckmässigerweise eine gezielte Einleitung eines entsprechenden Anteils des Fluides durch die auf der einen oder auf der anderen Seite in den Strömungskanal 42 einmündenden Fluideinlässe 106, um die Strömung an der Lenkfläche 116 oder 118 zu verstärken.

Gleiche Einzelheiten sind in den Figuren 6 und 7 mit denselben Bezugsziffern bezeichnet wie in den oben beschriebenen Zeichnungs-Figuren 1 bis 5, so dass es sich erübrigt, alle diese Einzelheiten in Verbindung mit den Figuren 6 und 7 noch einmal detailliert zu beschreiben.

Figur 8 zeigt abschnittweise in einer Schnittdarstellung wesentliche Teile des Messerhalters 18 mit einem keilförmigen Grundteil 26 und den beiden am Grundteil vorgesehenen Klemmbackenelementen 32, die zum Fixieren eines Schneidmessers 20 dienen. Das in Figur 8 auf der rechten Seite gezeichnete vordere Klemmbackenelement 32 ist mit einer Aussparung 120 ausgebildet, in welcher ein Organ 122 linear beweglich vorgesehen ist. Das Organ 122 ist mit einer Ausnehmung 124 ausgebildet, in die ein kugelabschnittförmiges Betätigungselement 126 hineinsteht. Vom Betätigungselement 126 steht ein Achsstummel 128 weg, der an einer Achse 130 befestigt ist. An der Achse 130 können seitlich ausserhalb des Messerhalters 18 (nicht gezeichnete) Schwenk- bzw. Betätigungshebel vorgesehen sein; es ist jedoch auch möglich, die Achse 130 mit einer geeigneten Antriebseinrichtung zu versehen, um durch eine oszillierende Verschwenkung der Achse 130 eine linear oszillierende Bewegung des Organs 122 in der Aussparung 120 zu bewirken. Das Organ 122 erstreckt sich spielfrei durch eine Platte 134 einer Ablöseeinrichtung 132 hindurch. Die Ablöseeinrichtung 132 ist derartig vorgesehen, dass sie sich mit der Vorderkante 136 der Platte 134 zur Messerschneide 28 des Schneidmessers 20 hin und von dieser zurück bewegen kann. Die Ablöseeinrichtung 132 dient damit zum Ablösen des rückwärtigen Randes des bzw. des jeweils letzten Dünnschnittes einer Dünnschnitt-Serie.

Aus Figur 8 sind ausserdem der im Boden 44 ausgebildete Sammelraum 50 und die zwischen dem Sammelraum 50 und der Kavität 48 eine fluidische Verbindung herstellenden Kanäle 88 sowie ein sich durch den Boden 44 erstreckender schlitzförmiger Fluideinlass 108 ersichtlich. Desweiteren ist eine den Boden 44 seitlich abschliessende Seitenwand 46 der Einrichtung 36 zu erkennen, wodurch der an die Kavität 48 anschliessende Strömungskanal 42 für ein strömendes Fluid festgelegt ist.

## Patentansprüche

1. Verfahren zur Herstellung von mittels eines Schneidmessers (20) eines Mikrotoms (12) von einer mittels eines Probenhalters (14) des Mikrotoms (12) gehaltenen Dünnschnittprobe (16) abgeschnittenen Dünnschnitten (98), die an ein Flüssigkeitsbad (40) übergeben werden,
**dadurch gekennzeichnet,**
dass die Übergabe der Dünnschnitte (98) vom Schneidmesser (20) an das Flüssigkeitsbad (40) mittels eines vom Schneidmesser (20) zu dem vom Schneidmesser (20) beabstandeten Flüssigkeitsbad (40) strömenden Fluides erfolgt.

2. Verfahren nach Anspruch 1,
**dadurch gekennzeichnet**,
dass die Übergabe der Dünnschnitte (98) mittels eines laminar strömenden Fluides erfolgt.

3. Verfahren nach Anspruch 1 oder 2,
**dadurch gekennzeichnet**,
dass als Fluid die Flüssigkeit des Bades (40) verwendet wird.

4. Verfahren nach einem der Ansprüche 1 bis 3,
**dadurch gekennzeichnet,**
dass das Fluid mittels einer Umlenkeinrichtung (56) wahlweise zum Flüssigkeitsbad (40) oder zu einem Abfallbehälter (52) gelenkt wird.

5. Verfahren nach einem der vorhergehenden Ansprüche,
**dadurch gekennzeichnet,**
dass die Fluidmenge und/oder die Fluidgeschwindigkeit stromabwärts nach dem Schneidmesser (20) eingestellt wird.

6. Verfahren nach einem der vorhergehenden Ansprüche,
**dadurch gekennzeichnet,**
dass die Ablösung des rückwärtigen Randes des bzw. des jeweils letzten Dünnschnittes (98) einer Dünnschnitt-Serie mittels einer neben dem Schneidmesser (20) vorgesehenen und in Bezug auf die Messerschneide (28) des Schneidmessers (20) verstellbaren Ablöseeinrichtung (132) erfolgt.

7. Vorrichtung zur Herstellung von Dünnschnitten (98) mittels eines Mikrotoms (12), das ein Schneidmesser (20) und einen für eine dünn zu schneidende Dünnschnittprobe (16) vorgesehenen Probenhalter (14) aufweist, die relativ zueinander beweglich sind, wobei zur Aufnahme der entsprechenden Dünnschnitte (98) ein Flüssigkeitsbad (40) vorgesehen ist,
**dadurch gekennzeichnet,**
dass das Flüssigkeitsbad (40) vom Schneidmesser (20) beabstandet vorgesehen ist, und dass zwischen dem Schneidmesser (20) und dem Flüssigkeitsbad (40) ein Strömungskanal (42) für ein Fluid vorgesehen ist, mittels welchem die Dünnschnitte (98) von der Messerschneide (28) des Schneidmessers (20) zum Flüssigkeitsbad (40) transportierbar sind bzw. transportiert werden, wobei der an die Messerschneide (28) angrenzende Abschnitt (82) des Schneidmessers (20) eine Kavität (48) des Strömungskanals (42) begrenzt, aus der zumindest ein Anteil des Fluids austritt und in den Strömungskanal (42) fliesst.

8. Vorrichtung nach Anspruch 7,
**dadurch gekennzeichnet,**
dass der Strömungskanal (42) für eine mindestens annähernd laminare Strömung des Fluids vorgesehen ist.

9. Vorrichtung nach Anspruch 7 oder 8,
**dadurch gekennzeichnet,**
dass der Strömungskanal (42) stromabwärts nach der Kavität (48) einen Boden (44) und zwei vom Boden (44) wegstehende einander gegenüberliegende Seitenwände (46) aufweist.

10. Vorrichtung nach Anspruch 9,
**dadurch gekennzeichnet,**
dass der Boden (44) und/oder die Seitenwände (46) mit Fluideinlässen (106, 108) zur wahlweisen Einstellung der Fluidmenge und/oder der Fluidgeschwindigkeit im Strömungskanal (42) vorgesehen sind.

11. Vorrichtung nach einem der Ansprüche 7 bis 10,
**dadurch gekennzeichnet,**
dass im Strömungskanal (42) zur wahlweisen Lenkung des Fluides zum Flüssigkeitsbad (40) oder zu einem Abfallbehälter (52) eine Umlenkeinrichtung (56) vorgesehen ist.

12. Vorrichtung nach Anspruch 11,
**dadurch gekennzeichnet,**
dass der Abfallbehälter (52) mittels einer Rückleitung (72) mit der an das Schneidmesser (20) angrenzenden Kavität (48) verbunden ist, wobei in der Rückleitung (72) eine Fördereinrichtung (70) für das Fluid vorgesehen ist.

13. Vorrichtung nach Anspruch 9 und 12,
**dadurch gekennzeichnet,**
dass die Rückleitung (72) mit den Fluideinlässen (106, 108) verbunden ist.

14. Vorrichtung nach einem der Ansprüche 10 bis 13,
**dadurch gekennzeichnet,**
dass das Flüssigkeitsbad (40) mit einem Überlauf (66) versehen ist, der in den Abfallbehälter (52) einmündet.

15. Vorrichtung nach Anspruch 11,
**dadurch gekennzeichnet,**
dass die Umlenkeinrichtung (56) eine um eine zum Boden (44) des Strömungskanals (42) parallele Schwenkachse (60) verschwenkbare, einen Abschnitt des Bodens (44) des Strömungskanals (42) bildende Klappe (58) aufweist.

16. Vorrichtung nach Anspruch 11,
**dadurch gekennzeichnet,**
dass die Umlenkeinrichtung (56) einen um eine zum Boden (44) des Strömungskanals (42) senkrechte Achse (100) schwenkbaren Teller (99) mit einer aus dem Tellerboden herausragenden Ablenkfläche (102) aufweist.

17. Vorrichtung nach Anspruch 11,
**dadurch gekennzeichnet,**
dass die Umlenkeinrichtung (56) einen um eine zum Boden (44) des Strömungskanals (42) senkrechte Drehachse (112) schwenkbaren Ablenkfinger (114) mit zwei aus dem Boden (44) des Strömungskanals (42) herausstehenden, voneinander abgewandten Lenkflächen (116, 118) aufweist.

18. Vorrichtung nach einem der Ansprüche 7 bis 17,
**dadurch gekennzeichnet,**
dass zum Ablösen des rückwärtigen Randes des bzw. des jeweils letzten Dünnschnittes (98) einer Dünnschnitt-Serie neben dem Schneidmesser (20) im Bereich der Kavität (48) des Strömungskanals (42) eine Ablöseeinrichtung (132) vorgesehen ist, die in Bezug auf die Messerschneide (28) verstellbar ist.

## Claims

1. A method for producing thin sections (98) cut off by means of a cutting knife (20) of a microtome (12) from a thin section specimen (16) held by means of a specimen holder (14) of the microtome (12), which sections are transferred to a liquid bath (40),
**characterized in that**
the transfer of the thin sections (98) from the cutting knife (20) to the liquid bath (40) is effected by means of a fluid flowing from the cutting knife (20) to the liquid bath (40) placed at a distance from the cutting knife (20).

2. A method according to claim 1,
**characterized in that**
the transfer of the thin sections (98) is effected by means of a fluid flowing in a laminar flow.

3. A method according to claim 1 or 2,
**characterized in that**
the liquid of the bath (40) is used as the fluid.

4. A method according to one of claims 1 to 3,
**characterized in that**
the fluid is selectably directed by means of a deflection device (56) to the liquid bath (40) or to a waste container (52).

5. A method according to one of the preceding claims,
**characterized in that**
the mass of the fluid and/or the fluid rate of flow is set downstream after the cutting knife (20).

6. A method according to one of the preceding claims,
**characterized in that**
the detachment of the rear edge of the thin section (98), or of the respective last thin section of a series of thin sections, is effected by means of a detachment device (132) provided next to the cutting knife (20) and being adjustable relative to the cutter blade (28) of the cutting knife (20).

7. A device for producing thin sections (98) by means of a microtome (12) which has a cutting knife (20) and a specimen holder (14) provided for a thin-section specimen (16) to be thinly cut, which are movable relative to one another, in which arrangement a liquid bath (40) is provided for receiving the respective thin sections (98),
**characterized in that,**
the liquid bath (40) is provided at a distance from the cutting knife (20) and that a flow channel (42) for a fluid is provided between the cutting knife (20) and the liquid bath (40), by means of which the thin sections (98) can be conveyed, or are conveyed, from the cutter blade (28) of the cutting knife (20) to the liquid bath (40), in which arrangement the section (82) of the cutting knife (20) adjoining the cutter blade (28) delimits a cavity (48) of the flow channel (42), from which cavity at least one portion of the fluid emerges and flows into the flow channel (42).

8. A device according to claim 7,
**characterized in that**
the flow channel (42) is designed for an at least approximately laminar flow of the liquid.

9. A device according to claim 7 or 8,
**characterized in that**
the flow channel (42) has downstream after the cavity (48), a bottom (44) and two side walls (46) projecting from the bottom (44) and lying opposite each other.

10. A device according to claim 9,
**characterized in that**
the bottom (44) and/or the side walls (46) are provided with fluid intakes (106, 108) for the selectable setting of the fluid mass and/or of the fluid rate of flow in the flow channel (42).

11. A device according to one of claims 7 to 10,
characterized in that
a deflection device (56) is provided in the flow channel (42) for the selectable direction of the fluid to the liquid bath (40) or to a waste container (52).

12. A device according to claim 11,
**characterized in that**
the waste container (52) is connected to the cavity (48) adjoining the cutting knife (20) by means of a return line (72), in which arrangement a conveyance device (70) for the fluid is provided in the return line (72).

13. A device according to claim 9 and 12,
**characterized in that**
the return line (72) is connected to the fluid intakes (106, 108).

14. A device according to one of claims 10 to 13,
**characterized in that**
the liquid bath (40) is provided with an overflow (66) which leads into the waste container (52).

15. A device according to claim 11,
**characterized in that**
the deflection device (56) has a flap (58) pivotable round a pivot pin (60) parallel to the bottom (44) of the flow channel (42), forming a section of the bottom (44) of the flow channel (42).

16. A device according to claim 11,
**characterized in that**
the deflection device (56) has a plate (99), pivotable round a pin (100) perpendicular to the bottom (44) of the flow channel (42), with a deflection face (102) projecting from the plate bottom.

17. A device according to claim 11
**characterized in that**
the deflection device (56) has a deflection finger (114), pivotable round a swivel pin (112) perpendicular to the bottom (44) of the flow channel (42), with two guide faces (116, 118) projecting from the bottom (44) of the flow channel (42) and facing away from each other.

18. A device according to one of claims 7 to 17,
**characterized in that**
for the detachment of the rear edge of the thin section (98), or of the respective last thin section of a series of thin sections, a detachment device (132) is provided next to the cutting knife (20) in the zone of the cavity (48) of the flow channel (42), which device is adjustable relative to the cutter blade (28).

## Revendications

1. Procédé pour la réalisation de tranches minces (98) découpées au moyen d'un couteau (20) d'un microtome (12) à partir d'un échantillon de couches minces (16) maintenu au moyen d'un porte-échantillon (14) du microtome (12), lesquelles tranches minces sont remises à un bain de liquide (40), caractérisé en ce que le transfert des tranches minces (98) du couteau (20) au bain du liquide (40) s'effectue au moyen d'un fluide circulant du couteau (20) au bain de liquide (40) situé à une certaine distance du couteau (20).

2. Procédé selon la revendication 1, caractérisé en ce que le transfert des tranches minces (98) s'effectue au moyen d'un fluide à écoulement laminaire.

3. Procédé selon la revendication 1 ou 2, caractérisé en ce que le liquide du bain (40) est utilisé comme fluide.

4. Procédé selon l'une quelconque des revendications 1 à 3, caractérisé en ce que le fluide est guidé au moyen d'un dispositif de déviation (56) au choix vers le bain de liquide (40) ou vers un récipient à déchets (52).

5. Procédé selon l'une quelconque des revendications précédentes, caractérisé en ce que la quantité de fluide eUou la vitesse du fluide est réglée en aval après le couteau (20).

6. Procédé selon l'une quelconque des revendications précédentes, caractérisé en ce que le décollement du bord arrière de la tranche mince ou de la dernière tranche mince (98) d'une série de tranches minces, s'effectue au moyen d'un dispositif de décollement (132) prévu à côté du couteau (20) et réglable par rapport à la lame (28) du couteau (20).

7. Dispositif pour la réalisation de tranches minces au moyen d'un microtome (12) qui présente un couteau (20) et un porte-échantillon (14) prévu pour un échantillon de tranches minces (16) à couper de façon fine, lesquels sont mobiles l'un par rapport à l'autre, un bain de liquide (40) étant prévu pour la réception des tranches minces (98) correspondantes, caractérisé en ce que le bain de liquide (40) est prévu à une certaine distance du couteau (20) et en ce qu'un canal d'écoulement (42) est prévu entre le couteau (20) et le bain de liquide (40) pour un fluide au moyen duquel les tranches minces (98) peuvent être transportées et sont transportées de la lame (28) du couteau (20) au bain de liquide (40), le tronçon (82), contigu à la lame (28), du couteau (20) limitant une cavité (48) du canal d'écoulement (42) de laquelle sort au moins une partie du fluide pour aller dans le canal d'écoulement (42).

8. Dispositif selon la revendication 7, caractérisé en ce que le canal d'écoulement (42) est prévu pour un écoulement au moins approximativement laminaire du fluide.

9. Dispositif selon la revendication 7 ou 8, caractérisé en ce que le canal d'écoulement (42) présente en aval après la cavité (48) un fond (44) et deux parois latérales (46) se faisant face et s'éloignant du fond (44).

10. Dispositif selon la revendication 9, caractérisé en ce que le fond (44) eUou les parois latérales (46) sont prévus avec des entrées de fluide (106, 108) pour le réglage optionnel de la quantité de fluide et/ou de la vitesse du fluide dans le canal d'écoulement (42).

11. Dispositif selon l'une quelconque des revendications 7 à 10, caractérisé en ce qu'un dispositif de déviation (56) est prévu dans le canal d'écoulement (42) pour le guidage optionnel du fluide vers le bain de liquide (40) ou vers un récipient à déchets (52).

12. Dispositif selon la revendication 11, caractérisé en ce que le récipient à déchets (52) est relié au moyen d'une conduite de retour (72) à la cavité (48) contigu au couteau (20), un dispositif de transport (70) pour le fluide étant prévu dans la conduite de retour (112).

13. Dispositif selon les revendications 9 et 12, caractérisé en ce que la conduite de retour (72) est reliée aux entrées de fluide (106, 108).

14. Dispositif selon l'une quelconque des revendications 10 à 13, caractérisé en ce que le bain de liquide (40) est pourvu d'un trop plein qui débouche dans le récipient à déchets (52).

15. Dispositif selon la revendication 11, caractérisé en ce que le dispositif de déviation (56) présente un clapet (58) pouvant basculer autour d'un axe de pivotement (60) parallèle au fond (44) du canal d'écoulement (42) et formant un tronçon du fond (44) du canal d'écoulement (42).

16. Dispositif selon la revendication 11, caractérisé en ce que le dispositif de déviation (56) présente un plateau (99) pouvant pivoter autour d'un axe (100) perpendiculaire au fond (44) du canal d'écoulement (42) et pourvu d'une surface de déviation (102) dépassant du fond du plateau.

17. Dispositif selon la revendication 11, caractérisé en ce que le dispositif de déviation (56) présente un doigt de déviation (114) pouvant basculer autour d'un axe de rotation (112) perpendiculaire au fond (44) du canal d'écoulement (42) et pourvu de deux surfaces de guidage (116, 118) dépassant du fond (44) du canal d'écoulement (42) et opposées l'une à l'autre.

18. Dispositif selon l'une quelconque des revendications 7 à 17, caractérisé en ce que, pour le décollement du bord arrière de la tranche mince, respectivement de la dernière tranche mince (98), d'une série de tranches minces, il est prévu à côté du couteau (20) dans la zone de la cavité (48) du canal d'écoulement (42) un dispositif de décollement (132) qui est réglable par rapport à la lame du couteau (28).
